Europäisches Patentamt

European Patent Office

Office européen des brevets

(11) Numéro de publication: **0 208 364**
**A2**

(12) **DEMANDE DE BREVET EUROPEEN**

(21) Numéro de dépôt: 86201108.7

(22) Date de dépôt: 25.06.86

(51) Int. Cl.⁴: **B 60 Q 1/50**

(30) Priorité: 03.07.85 BE 215293

(43) Date de publication de la demande:
14.01.87 Bulletin 87/3

(84) Etats contractants désignés:
FR GB IT SE

(71) Demandeur: Comfortrade Ltd.
Lindenhofstrasse, 40
CH-4052 Basel(CH)

(72) Inventeur: Meert, Roland
Avenue Fr. Roosevelt 230
B-1050 Bruxelles(BE)

(74) Mandataire: Thirion, Robert et al,
Bureau GEVERS S.A. 7, rue de Livourne Bte 1
B-1050 Bruxelles(BE)

(54) Procédé pour renforcer la sécurité routière dans l'obscurité et véhicule agencé pour la mise en oeuvre de ce procédé.

(57) Procédé pour renforcer la sécurité routière dans l'obscurité ou en cas de mauvaise visibilité, consistant à rendre visible et identifiable dans l'obscurité au moins un signe distinctif (1) situé à l'avant (2) de certains véhicules automobiles (3), en particulier de véhicule automobiles rapides, de manière à ce que le signe distinctif (1) desdits véhicules soit aisément perçu, indépendamment de leurs phares (7), par les conducteurs des véhicules qui les précèdent ou circulent en sens inverse et véhicule (3) pour la mise en oeuvre de ce procédé.

Fig.1.

EP 0 208 364 A2

Croydon Printing Company Ltd.

**"Procédé pour renforcer la sécurité routière dans l'obscurité et véhicule agencé pour la mise en oeuvre de ce procédé"**

La présente invention a pour objet un procédé pour renforcer la sécurité routière dans l'obscurité ou en cas de mauvaise visibilité.

Le parc automobile est constitué de véhicules dont les puissances et les vitesses sont fort différentes et l'on sait que de nombreux accidents, souvent graves, surviennent lors de tentatives de dépassement ou en cours de dépassement de véhicules. On sait également que, si par bonne visibilité, il est possible d'apprécier correctement les distances, cette appréciation devient particulièrement difficile, malgré les phares, dans l'obscurité, ou par mauvaise visibilité.

On constate aussi que lorsque la visibilité est bonne, bon nombre de conducteurs de véhicules circulant plus ou moins lentement soit n'entameront pas une manoeuvre de dépassement, soit se rabattront spontanément pour céder le passage, lorsqu'ils constateront qu'une voiture rapide, qui les suit et qui a été facilement identifiée dans le rétroviseur grâce à son ou ses signes distinctifs, s'apprête à effectuer une manoeuvre de dépassement ou a déjà entamé cette dernière. Il en est de même lorsque le conducteur d'un véhicule lent aperçoit, lors d'une tentative de dépassement ou lors d'un dépassement et lorsque la circulation s'effectue dans les deux sens sur une même voie, un véhicule rapide venant en sens inverse et facilement identifiable grâce à son ou ses signes distinctifs visibles pendant la circulation diurne.

Si donc l'identification des véhicules rapides ne pose pas de problèmes particuliers en conduite diurne et par bonne visibilité, par contre cette identification devient impossible dans l'obscurité et par mauvaise visibilité et ce, étant donné que les phares, qui sont alors les seules parties visibles des véhicules, ont sensiblement la même puissance pour tous les véhicules. Or c'est justement quand ladite identification serait nécessaire, à cause de la mauvaise appréciation des distances, qu'elle fait défaut.

L'invention a pour but de remédier à ce grave inconvénient et de permettre l'identification nocturne des véhicules rapides afin de réduire les risques de collision lors de manoeuvres de dépassement et, de là, renforcer la sécurité routière.

A cet effet, le procédé suivant l'invention consiste à rendre visible et identifiable dans l'obscurité au moins un signe distinctif situé à l'avant de certains véhicules automobiles, en particulier de véhicules automobiles rapides, de manière à ce que le signe distinctif desdits véhicules soit aisément perçu, indépendamment de leurs phares, par les conducteurs des véhicules qui les précèdent ou circulent en sens inverse.

L'invention est également relative à un véhicule automobile qui comprend un signe distinctif situé à l'avant du véhicule et des moyens pour rendre ce signe distinctif visible dans l'obscurité, ce signe distinctif étant avantageusement situé entre les phares du véhicule et de préférence à distances égales de ces derniers.

D'autres détails et particularités de l'invention ressortiront de la description des dessins annexés au présent mémoire, et qui illustrent, à titre d'exemples non limitatifs, le procédé et le véhicule automobile suivant l'invention.

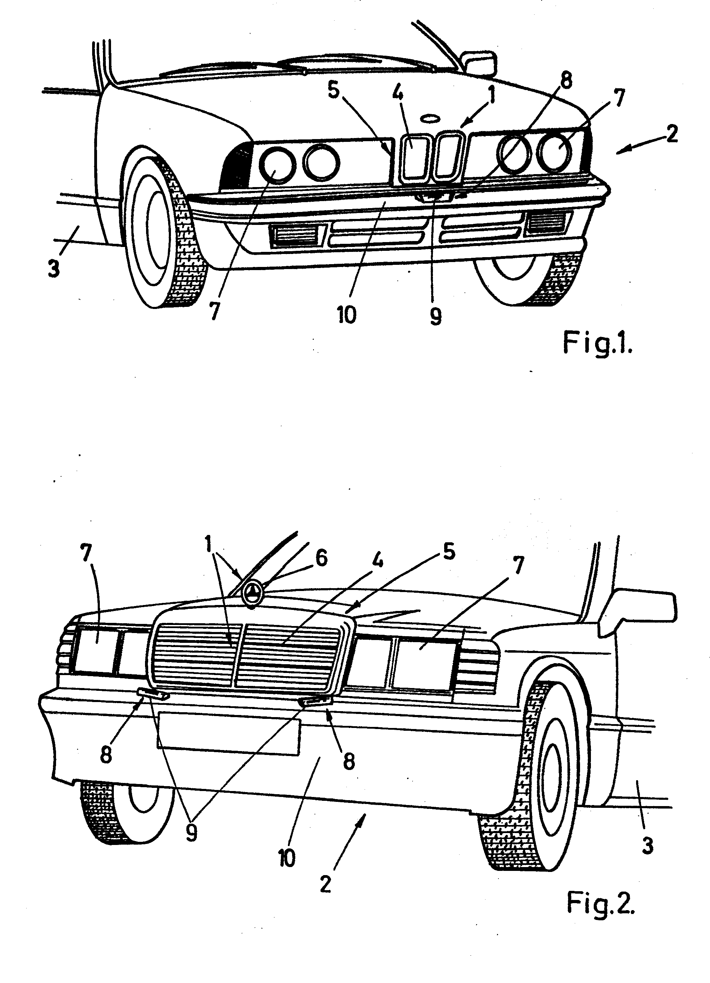

Les figures 1 et 2 sont des vues partielles, en perspective, montrant l'avant de deux véhicules rapides équipés pour la mise en oeuvre du procédé susdit.

Dans ces deux figures, les mêmes chiffres de référence désignent des éléments identiques ou analogues.

Le procédé suivant l'invention et tel qu'illustré aux dessins consiste, pour rendre plus sûres les manoeuvres de dépassement et de là renforcer la sécurité routière, à rendre visible et identifiable dans l'obscurité un signe distinctif 1, situé à l'avant 2 de véhicules automobiles rapides 3, afin que ce signe distinctif 1 soit aisément perçu, indépendamment des phares desdits véhicules 3, par les conducteurs des autres véhicules qui les précèdent ou qui circulent en sens inverse. Ce signe distinctif 1 peut être constitué soit par au moins une partie 4 facilement identifiable de la calandre 5 desdits véhicules 3, soit par un insigne ou sigle 6 particulier à la marque de ces derniers. Le signe 1 est avantageusement rendu visible en l'éclairant simultanément à l'allumage des phares 7 des véhicules.

Les véhicules 3 représentés aux dessins comprennent donc un signe distinctif 1 permettant de les identifier facilement ainsi que des moyens 8, pour rendre ce signe 1 visible dans l'obscurité. Ce signe distinctif 1 sera avantageusement situé entre les phares 7 des véhicules et de préférence à distances égales desdits phares. Les moyens 8 prévus pour rendre ce signe distinctif 1 visible sont avantageusement constitués par un dispositif d'éclairage 9 monté sur le pare-chocs avant 10 et orienté vers le signe 1 afin de l'éclairer d'une manière telle que celui-ci puisse être facilement perçu et identifié par un observateur situé en avant du véhicule, le dispositif d'éclairage 9 comprenant avantageusement un interrupteur de commande couplé à la commande des phares 7 du véhicule.

Il doit être entendu que l'invention n'est nullement limitée aux formes de réalisation décrites et que bien des modifications peuvent être apportées à ces dernières sans sortir du cadre du présent brevet.

C'est ainsi que le procédé suivant l'invention pourrait s'appliquer à l'identification aisée, la nuit, de véhicules d'interventions ou de secours qui, plutôt que d'utiliser sirènes et phares tournants, seraient équipés de signes distinctifs fixes éclairés.

4

0208364

## <u>REVENDICATIONS</u>

1. Procédé pour renforcer la sécurité routière dans l'obscurité ou en cas de mauvasie visibilité, caractérisé en ce qu'il consiste à rendre visible et identifiable dans l'obscurité au moins un signe distinctif (1) situé à l'avant (2) de certains véhicules automobiles rapides, de manière à ce que le signe distinctif (1) desdits véhicules soit aisément perçu, indépendamment de leurs phares, par les conducteurs des véhicules qui les précèdent ou circulent en sens inverse.

2. Procédé suivant la revendication 1, caractérisé en ce que le signe distinctif (1) précité du véhicule automobile est constitué par au moins une partie (4) de la calandre (5) dudit véhicule (3), cette partie (4) de calandre étant choisie de manière à permettre une identification rapide et certaine du véhicule.

3. Procédé suivant la revendication 1, caractérisé en ce que le signe distinctif (1) du véhicule automobile (3) est constitué par un insigne ou sigle (6) particulier à la marque du véhicule et qui permet une identification rapide et certaine de ce dernier.

4. Procédé suivant l'une quelconque des revendications 1 à 3, caractérisé en ce qu'il consiste à rendre le signe distinctif (1) susdit visible en l'éclairant simultanément à l'allumage des phares du véhicule (3).

5. Véhicule automobile (3) agencé pour la mise en oeuvre du procédé suivant l'une quelconque des revendications 1 à 4, caractérisé en ce qu'il comprend un signe distinctif (1) situé à l'avant du véhicule et des moyens (8) pour rendre ce signe distinctif visible dans l'obscurité.

6. Véhicule automobile suivant la revendication 5, caractérisé en ce que le signe distinctif (1) susdit est situé entre les phares (7) du véhicule et de préférence à distances égales de ces derniers.

7. Véhicule suivant l'une ou l'autre des revendications 5 et 6, caractérisé en ce que les moyens (8) prévus pour rendre le signe distinctif (1) visible sont constitués par un dispositif d'éclairage (9) orienté vers le signe distinctif (1) de manière à ce que celui-ci puisse être perçu par un observateur situé en avant du véhicule, ces moyens comprenant un interrupteur de commande dudit dispositif d'éclairage qui est couplé à la commande des phares (7) du véhicule (3).

Fig.1.

Fig.2.